# EUROPEAN PATENT SPECIFICATION

(11) **EP 4 369 945 B1**
(45) Date of publication and mention of the grant of the patent: **29.01.2025**
(21) Application number: 22736312.4
(22) Date of filing: 13.07.2022
(51) Int. Cl.: A23L 7/109, A21D 13/40, A21C 11/20, A21C 3/04

(54) **PROCESS FOR THE PRODUCTION OF PASTA BY MEANS OF EXTRUSION THROUGH A BRONZE DIE PLATE INSERT WITH GROOVES**
VERFAHREN ZUR HERSTELLUNG VON TEIGWAREN DURCH EXTRUSION DURCH EINEN BRONZEFORMPLATTENEINSATZ MIT RILLEN
PROCÉDÉ POUR LA PRODUCTION DE PÂTES AU MOYEN D'UNE EXTRUSION À TRAVERS UN INSERT DE PLAQUE DE FILIÈRE EN BRONZE AYANT DES RAINURES

(30) Priority: 13.07.2021 IT 202100018494
(43) Date of publication of application: 22.05.2024
(73) Proprietor: BARILLA G. e R. Fratelli S.p.A., 43100 Parma (IT)
(72) Inventor: BARBA, Francesco, 43015 Noceto PR (IT); PIZZABIOCCA, Flavia, 00053 Civitavecchia RM (IT); PANTO', Francesco, 43126 Parma (IT); BARDIANI, Italo, 43123 Parma (IT)
(74) Representative: Botti & Ferrari S.p.A.
(86) International application number: PCT/EP2022/069638
(87) International publication number: WO 2023/285551

(56) References cited:
- EP-A1- 2 737 800
- WO-A1-2021/083990
- US-A- 4 208 439
- US-A- 4 394 397
- US-A- 6 146 682
- US-B2- 6 541 059
- LUCISANO M ET AL: "Influence of die material on pasta characteristics", FOOD RESEARCH INTERNATIONAL, ELSEVIER, AMSTERDAM, NL, vol. 41, no. 6, 1 July 2008 (2008-07-01), pages 646 - 652, XP022819231, ISSN: 0963-9969, [retrieved on 20080404], DOI: 10.1016/J.FOODRES.2008.03.016

## Description

### Field of application

The present invention relates to a process for the production of pasta, for example durum wheat semolina pasta, obtained by means of extrusion of a dough through a die plate insert made of bronze.

More specifically, said process involves the production of a food product by means of extrusion of a dough through a die plate insert made of bronze and provided with grooves,

The present invention also relates to a food product of the aforementioned type, such as durum wheat semolina dried pasta obtained by means of this process.

The present invention also relates to a die plate insert adapted to perform this process.

### Prior art

In the art different types of dies and extrusion methods for the productions of pasta-like foodstuffs, including durum wheat semolina pasta, are known.

In Italy, "durum wheat semolina pasta" and "durum wheat semolato pasta" are the products obtained from the drawing or rolling and subsequent drying of doughs prepared respectively and exclusively with durum wheat semolina and semolato and water (Law 580/67).

Drawing is the conventional term improperly used to indicate the extrusion step, which represents a crucial operation in the production of pasta since it determines the form and the thickness of the finished product, but also allows it to be provided with specific surface roughness characteristics.

Both the terms "drawing" and "extrusion" will be used, it being understood that "drawing" is used here as a synonym for "extrusion".

Commonly, the drawing step is performed by the passage of a dough through inserts made of bronze or polytetrafluoroethylene (also known by the trade name of Teflon).

EP2737800A1 discloses a pasta extrusion die characterized by the combination of polytetrafluoroethylene and bronze in sequence on the extruding surface within the same die.

US6541059B2 and US4394397A merely concern processes for the production of pasta, namely as rehydratable noodles, these processes comprising preliminary heat treatments and preliminary steps for the gelatinization of starch.

WO2021/083990 A1 regards a process for the production of a pasta food product, which comprises the step c) of extruding a dough by extrusion through a die plate insert made of polyoxymethylene copolymer. The obtained pasta has surface roughness properties between those of a bronze-extruded pasta and a Teflon-extruded pasta.

The publication "Influence of die material on pasta characteristics" of Lucisano M. et al., Food Research International 41 (2008) 646-652, discloses the production of pasta extruded by means of a conventional bronze die plate insert and compares its surface porosity with that of a Teflon-extruded pasta.

Drawing performed using inserts made of bronze or other metals having a good surface roughness results in the production of a pasta with an artisanal appearance owing to the visibly more porous and opaque surface.

When the pasta is cooked, it acquires a rough and porous surface which results in a pleasant grainy taste to the palate as well as allowing the sauce to adhere better.

The consumption of bronze-extruded pasta is generally very widespread and appreciated, especially in Italy, not only because of the characteristic grainy taste, but also because of its decidedly more artisanal appearance compared, for example, to Teflon-extruded pasta. In fact, both these characteristics trigger in the consumer the idea of greater genuineness.

However, the appearance and taste experience of most commercially available bronze-extruded pastas is not comparable to that of artisanally and traditionally produced bronze-extruded pasta.

In fact, although having a porous appearance and a particularly intense grainy taste to the palate, the commercially available bronze-extruded pastas do not have a roughness and, once cooked, a consequent grainy taste comparable to that of artisanally produced bronze-extruded pastas.

It is known in the art to regulate the surface roughness of the inserts for dies and, similarly the process conditions, as well as the viscosity of the dough or the pressure exerted on it during the drawing operation, in order to obtain bronze-extruded pasta having a porosity and roughness which are more or less accentuated.

On the other hand, the reason why the production of pasta is not performed by means of the extrusion of doughs which are particularly viscous and through dies which have a surface roughness such as to produce, even industrially, pastas with a porosity and a grainy taste which is particularly intense, equivalent to that of traditional bronze-extruded pasta, lies in the high pressures which the extrusion operation in this case would require.

In particular, the extrusion operation performed at an excessively high pressure, such as to allow a particularly porous and rough bronze-extruded pasta to be obtained, would be unlikely to allow the production of long pasta such as spaghetti, linguine and bucatini.

Therefore, even though the technologies known in the art propose the production of bronze-extruded pasta with the aid of inserts having a variable surface roughness, depending on the manufacturer requirements and the desired porosity characteristics of the finished product, there exists a particularly pressing need to provide a process for the production of pasta, in particular bronze-extruded pasta, having a roughness comparable to that of artisanally produced bronze-extruded pastas, which involves a drawing operation carried in accordance with process parameters which are compatible with industrial production requirements.

Basically, the technical problem underlying the present invention is that of providing a pasta production process which is able to obtain a finished product having porosity and surface roughness characteristics comparable to those of traditional bronze-extruded pastas, namely superior to those of commercially available bronze-extruded pastas, and which moreover envisages a extrusion operation performed in accordance with process conditions which are compatible with the requirements of industrial production, overcoming the aforementioned problems of the prior art.

### Summary of the invention

This technical problem has been solved, according to the invention, by means of a process for the production of pasta comprising the following steps:
a) providing a bronze die plate insert comprising at least one through-hole, wherein said through-hole extends along an extrusion path and has a working surface with grooves having a depth of between 0.05 mm and 0.3 mm;
b) mixing water and a meal which is suitable for producing pasta, so as to obtain a dough with a water content of between 33.5% and 38.5% by weight of its total weight;
c) kneading said dough;
d) extruding said kneaded dough through said at least one through-hole of the aforementioned bronze die plate insert;
e) drying said extruded dough, obtaining pasta with a moisture content which is equal to or less than 12.5% by weight of its total weight.

Preferably, the aforementioned meal which is suitable for producing pasta is a cereal flour or semolina, more preferably durum wheat semolina or semolato.

In particular, in accordance with the present invention the term "pasta" will be used to refer to a product which is entirely similar to "durum wheat semolina pasta", as defined in the aforementioned standard of the prior art, with regard to moisture content, consistency and cooking times, even though it does not comply with the requisites of the standard in question, which envisages the use of this name only for products containing at least 50% durum wheat semolina.

In accordance with the present invention, the term "to mix" or "mixing" is understood as meaning a step for performing mixing under the action of a mechanical element suitable for the purpose, carried out under predefined temperature and air humidity conditions, wherein the selected ingredients, including said meal and water, are mixed with consequent hydration of the starch and possible formation of gluten, until a homogeneous and elastic dough having the specific moisture content is formed.

In accordance with the present invention, the term "kneading" is understood as meaning a step in which the dough is worked until an optimum consistency and plasticity is obtained.

In accordance with the present invention, the aforementioned steps b), c) and d) involving mixing, kneading and extrusion may be performed within the same extruder.

Advantageously, in particular owing to the extrusion step d) in which a bronze die plate insert with at least one through-hole having specific surface characteristics is used, the process according to the present invention allows the production of a pasta with a particularly high surface roughness.

In particular, during the extrusion step d), the dough is made to flow through the aforementioned at least one through-hole and, owing to the interaction with this working surface, specific surface roughness characteristics are imparted firstly to the dough thus extruded and then to the dried product.

More specifically, these surface roughness characteristics are determined by the combined effects of the material with which said extrusion insert is made, namely bronze, and the configuration of the working surface, namely by these grooves.

As will be illustrated below with reference to the detailed description, the present process is able to produce a pasta having a surface roughness superior to that of the various forms of commercially available bronze-extruded pasta.

Preferably, the pasta obtained during the aforementioned step e) is dried pasta.

More preferably, the pasta obtained during the aforementioned step e) is durum wheat semolina dried pasta.

It is also understood that, in accordance with the present invention, the form and the dimensions of the at least one through-hole comprised in the bronze die plate insert may be suitably varied in order to produce pasta with the desired type, for example short or long pasta, in particular ridged pasta.

Therefore, in an advantageous manner, the present process is able to provide pasta with particularly superior surface roughness characteristics, both for long pasta types and for short pasta types.

Preferably, the aforementioned grooves on the working surface have a depth of between 0.08 mm and 0.3 mm, more preferably between 0.08 mm and 0.28 mm, even more preferably between 0.1 mm and 0.2 mm.

Preferably, the grooves on the working surface of said at least one through-hole extend transversely with respect to the direction of the aforementioned extrusion path.

According to one embodiment of the present process, the grooves on the working surface of said at least one through-hole may be shaped as a thread.

In accordance with the present invention, the term "thread" is understood as meaning a groove or cut with a helical progression, which is formed on said working surface and which describes on the latter an alternation of outer tips, or crests, and inner tips, or troughs, wherein adjacent crests have a predefined distance, otherwise known as pitch, and the troughs have a profile angle, also of a predefined size.

More specifically, said thread has grooves which extend transversely with respect to the direction of the aforementioned extrusion path, namely has its origin, on said working surface, at the point of entry of the dough into said at least one through-hole and terminates at the point where the dough exits, or vice versa.

Preferably, said thread-shaped grooves have a pitch of between 0.30 mm and 1 mm, more preferably between 0.45 mm and 0.70 mm.

In an equally preferred manner, these thread-shaped grooves have troughs with a profile angle having a value of between 20° and 90°, more preferably between 40° and 65°, even more preferably between 45° and 60°.

In an equally preferred manner, these thread-shaped grooves have a depth of between 0.08 mm and 0.3 mm, more preferably between 0.08 mm and 0.28 mm, even more preferably between 0.1 mm and 0.2 mm.

Preferably, said at least one through-hole has a cavity with a substantially circular shaped cross-section.

More preferably, said circular-shaped cross-section has a diameter of between 1.5 mm and 4 mm, even more preferably between 2 mm and 3 mm.

In an entirely preferred manner, the pasta obtained during said step e) is a durum wheat pasta in a type selected from spaghetti or spaghettoni.

According to a further embodiment of the present process, the grooves on the working surface of said at least one through-hole may be shaped as a plurality of cuts, wherein said cuts are separate from and parallel to each other and are oriented transversely with respect to the direction of the aforementioned extrusion path.

Preferably, said transverse cuts are oriented perpendicularly with respect to the direction of the aforementioned extrusion path.

Preferably, said grooves in the form of a plurality of transverse cuts have a pitch of between 0.7 mm and 1 mm.

In an equally preferred manner, said grooves in the form of a plurality of transverse cuts have troughs with a profile angle having a value of between 20° and 90°, more preferably between 40° and 65°, even more preferably between 45° and 60°.

In an equally preferred manner, said grooves in the form of a plurality of cuts have a depth of between 0.08 mm and 0.3 mm, more preferably between 0.08 mm and 0.28 mm, even more preferably between 0.1 mm and 0.2 mm.

In an entirely preferred manner, the pasta-type food product obtained during said step e) is a durum wheat pasta in a type chosen from linguine, penne, mezze penne, mezzi rigatoni, tortiglioni, square spaghetti, spaghetti, spaghettoni, fusilloni and fusilli.

According to a variant of the present embodiment, said at least one bronze die plate insert comprises a main body in which said at least one through-hole is made, said through-hole comprising a first working surface, and at least one substantially cylindrical central pin, said central pin extending longitudinally inside said at least one through-hole and having a second working surface, wherein said first working surface has grooves in the form of a plurality of cuts, said cuts being separate from and parallel to each other.

Even more preferably, said first working surface has grooves in the form of a plurality of cuts, said cuts being oriented transversely, in an entirely preferred manner perpendicularly, with respect to the direction of said extrusion path.

More specifically, said at least one through-hole comprises a cavity, which is delimited externally by said first working surface and internally by said second working surface.

More particularly, said cavity has a cross-section having substantially the form of an annulus.

More precisely, the first working surface describes the outermost circumference of the annulus of the cross-section of said cavity and the second working surface describes the innermost circumference of the annulus of the cross-section of the same cavity.

Preferably, said second working surface has grooves.

More preferably, the grooves present on said second working surface may be shaped as a plurality of cuts, wherein said cuts are separate from and parallel to each other and are oriented transversely, even more preferably perpendicularly, with respect to the direction of the aforementioned extrusion path.

In accordance with this variant of the present embodiment, the pasta-type food product obtained during said step e) is durum wheat pasta in a type selected from penne or mezze penne.

Preferably, the grooves in the form of a plurality of cuts on said second working surface have a pitch of between 0.7 mm and 1.5 mm.

In an equally preferred manner, said grooves in the form of a plurality of cuts on said second working surface have troughs with a profile angle having a value of between 20° and 90°, more preferably between 40° and 65°, even more preferably between 45° and 60°.

In an equally preferred manner, said grooves in the form of a plurality of cuts on said second working surface have a depth of between 0.08 mm and 0.3 mm, more preferably between 0.08 mm and 0.28 mm, even more preferably between 0.1 mm and 0.2 mm.

Alternatively, according to a variant of the present embodiment, the grooves present on said second working surface may be shaped as a thread or as a groove or cut with a helical progression, as described above.

In accordance with this further variant of the present embodiment, the pasta-type food product obtained during said step e) is durum wheat pasta in a type chosen from mezzi rigatoni or tortiglioni.

More specifically, said thread has grooves which extend transversely with respect to the direction of the aforementioned extrusion path, namely has its origin, on said second working surface, at the point of entry of the dough into said at least one through-hole and terminates at the point where the dough exits, or vice versa.

In accordance with this variant of the present embodiment, said thread-shaped grooves have a pitch of between 0.30 mm and 1.5 mm, more preferably between 0.50 mm and 1 mm.

In an equally preferred manner, these thread-shaped grooves have troughs with a profile angle having a value of between 20° and 90°, more preferably between 40° and 65°, even more preferably between 45° and 60°.

In an equally preferred manner, these thread-shaped grooves have a depth of between 0.08 mm and 0.3 mm, more preferably between 0.08 mm and 0.28 mm, even more preferably between 0.1 mm and 0.2 mm.

Alternatively, the grooves on the working surface of said at least one through-hole may extend longitudinally with respect to the direction of the aforementioned extrusion path.

According to an embodiment of the present process, the grooves on the working surface of said at least one through-hole are shaped as a plurality of cuts, wherein said cuts are separate from and parallel to each other and are oriented longitudinally with respect to the direction of the aforementioned extrusion path.

Preferably, these longitudinal cuts are oriented parallel to the direction of the aforementioned extrusion path.

In an equally preferred manner, said grooves in the form of a plurality of longitudinal cuts have troughs with a profile angle having a value of between 20° and 90°.

In an equally preferred manner, said grooves in the form of a plurality of longitudinal cuts have a depth of between 0.08 mm and 0.3 mm and more preferably between 0.1 mm and 0.3 mm, even more preferably equal to 0.27 mm.

In an entirely preferred manner, the pasta obtained during said step e) is a durum wheat pasta with a type chosen from penne, spaghetti and laminated pasta dough ("pasta sfoglia").

In the case where the durum wheat pasta obtained in step e) is of the type of penne, according to the latter embodiment of the process of the present invention, it is understood that said at least one bronze die plate insert comprises said main body in which said at least one through-hole is made, said through-hole comprising a first working surface, and at least one substantially cylindrical central pin, said central pin extending longitudinally inside said at least one through-hole and having a second working surface, wherein the grooves on the first working surface of said at least one through-hole are shaped as a plurality of cuts, said cuts being separate from and parallel to each other and are oriented longitudinally with respect to the direction of the aforementioned extrusion path.

Preferably, these longitudinal cuts present on the first working surface are oriented parallel to the direction of the aforementioned extrusion path.

In an equally preferred manner, said grooves present on the first working surface in the form of a plurality of longitudinal cuts have troughs with a profile angle having a value of between 20° and 90°.

In an equally preferred manner, said grooves present on the first working surface in the form of a plurality of longitudinal cuts have a depth of between 0.08 mm and 0.3 mm and more preferably between 0.1 mm and 0.3 mm, even more preferably equal to 0.27 mm.

Preferably, the second working surface comprises grooves and more preferably the grooves present on the second working surface, corresponding to the surface of said central pin, are also shaped as a plurality of cuts, where said cuts are separate from and parallel to each other and are oriented longitudinally with respect to the direction of the aforementioned extrusion path.

Preferably, these longitudinal cuts present on the second working surface are oriented parallel to the direction of the aforementioned extrusion path.

In an equally preferred manner, said longitudinal cuts present on the second working surface have troughs with a profile angle having a value of between 20° and 90°.

In an equally preferred manner, said longitudinal cuts present on the second working surface have a depth of between 0.08 mm and 0.3 mm and preferably between 0.1 mm and 0.3 mm, more preferably equal to 0.27 mm.

Preferably and in an entirely general manner, during the mixing step b), a dough with a moisture content of between 35.5% and 37% by weight of the total weight of said dough is obtained.

In an equally preferred manner, the aforementioned mixing step b) is performed at a temperature of between 20°C and 50°C, more preferably between 30°C and 40°C, for a time period of between 20 minutes and 30 minutes.

Preferably, according to an entirely preferred embodiment, the mixing step b) is carried out by subjecting the dough to partial vacuum conditions, more preferably a pressure of between -500 mmHg and - 700 mmHg, even more preferably between -600 mmHg and -670 mmHg.

Advantageously, by subjecting the dough to partial vacuum conditions, the dough is prevented from coming into contact with the external air, thus preventing possible oxidation or avoiding negatively affecting the consistency and organoleptic characteristics of the dough.

Preferably, the extrusion step d) is carried out by exerting on the dough a pressure of between 60 bar and 110 bar, more preferably between 75 bar and 100 bar, even more preferably between 85 bar and 100 bar.

In an entirely preferred manner, the extrusion step d) is carried out by exerting a pressure of between 85 bar and 95 bar on the dough.

Advantageously, therefore, the process according to the present invention allows to perform the extrusion step d) at a pressure less than the pressure required for conventional bronze-extruded pasta production processes, which normally exceed 100 bar, in particular greater than 105 bar.

In other words, as will be seen further below, also in relation to the detailed description and the examples, not only is the present process able to provide bronze-extruded pasta with a particularly high surface roughness, but it also allows the drawing operation, and therefore the extrusion step d), to be carried out in accordance with process parameters which are more compatible with industrial production requirements, compared to the technologies known in the art.

As already partly mentioned above, according to a preferred embodiment of the present process, the extrusion step d) may be performed by means of an extruder, more specifically an extruder comprising at least one endless screw, suitable for moving the aforementioned dough towards the aforementioned insert, wherein said endless screw is made to rotate at a speed of between 19 rpm and 22 rpm.

Preferably, the pasta obtained during said drying step e) may have a surface roughness Rz of between 25 µm and 65 µm, more preferably between 40 µm and 60 µm, even more preferably between 45 µm and 55 µm, calculated in accordance with the method DIN EN ISO 4287:1998.

In particular, the pasta obtained during said drying step e) may have a surface roughness Rz of between 45 µm and 65 µm, more preferably between 45 µm and 60 µm, even more preferably between 45 µm and 55 µm, calculated in accordance with the method DIN EN ISO 4287:1998.

In an entirely preferred manner, in the case of short pasta, for example penne, optionally in the case where the extrusion step d) is carried out by exerting on the dough a pressure of between 85 bar and 100 bar, the pasta obtained in said drying step e) may have a surface roughness Rz of between 45 µm and 55 µm, calculated in accordance with the method DIN EN ISO 4287:1998.

In an entirely preferred manner, in the case of long pasta, for example spaghetti or spaghettoni, optionally in the case where the extrusion step d) is carried out by exerting on the dough a pressure of between 85 bar and 100 bar, the pasta obtained in said drying step e), may have a surface roughness Rz of between 35 µm and 55 µm, calculated in accordance with the method DIN EN ISO 4287:1998.

According to a different approach and in an equally preferred manner, the pasta which can be obtained following said drying step e) may have a surface roughness Ra of between 4 µm e 11.5 µm, more preferably between 6 µm and 10 µm, even more preferably between 8.5 µm and 9.5 µm, calculated in accordance with the method DIN EN ISO 4287:1998.

In an entirely preferred manner, in the case of short pasta, for example penne, optionally in the case where the extrusion step d) is carried out by exerting on the dough a pressure of between 85 bar and 100 bar, the pasta which can be obtained in said drying step e) may have a surface roughness Ra of between 8.5 µm and 9.5 µm, calculated in accordance with the method DIN EN ISO 4287:1998.

In an entirely preferred manner, in the case of long pasta, for example spaghetti or spaghettoni, optionally in the case where the extrusion step d) is carried out by exerting on the dough a pressure of between 85 bar and 100 bar, the pasta obtainable in said drying step e) may have a surface roughness Ra of between 6 µm and 9.5 µm, calculated in accordance with the method DIN EN ISO 4287:1998.

Advantageously, especially with reference to the roughness value Rz and the test examples described below, the process according to the present invention is therefore able to provide a pasta, more specifically a durum wheat dried pasta, having a greater roughness than the commercially available forms of pasta made by the most widely known manufacturers.

It should also be said that this particularly advantageous result is obtained in accordance with process parameters which are certainly compatible with industrial production requirements, in particular as regards the aforementioned preferred pressure values which are exerted on the dough during the extrusion step d).

Still with reference to the test examples described below, it has been advantageously possible to establish that the pasta which can be obtained by means of the process according to the present invention, when subjected to conventional cooking in boiling water, retains a more grainy taste, which is particularly liked by consumers.

In addition, the pasta which can be obtained according to the present process is able to ensure good adherence of the sauce with which the pasta is dressed, when cooked in the traditional manner.

Preferably, during the aforementioned drying step e), a pasta with a moisture content of between 10% and 12% by weight, more preferably between 10% and 11.5% by weight, of its total weight is obtained.

In an advantageous manner, the process according to the present invention ensures the production of pasta with moisture characteristics which allow it to be stored for a long period, of at least 6 months, preferably at least 12 months, at room temperature and in a cool and dry environment.

Preferably, said drying step e) is carried out at a temperature of between 50°C and 100°C, more preferably between 70°C and 85°C.

In an equally preferred manner, said drying step e) may be preceded by at least a partial surface drying step ("incartamento") during which said extruded dough is partially dried on the surface by means of application of a hot air flow, preferably said hot air flow having a temperature of between 50°C and 100°C.

In an equally preferred manner, following the drying step e), the pasta thus obtained is cooled, for example with the aid of an air flow at room temperature.

The aforementioned technical problem is also solved by a pasta which can be obtained according to the process of the present invention and with a surface roughness Rz of between 25 µm and 65 µm, preferably between 40 µm and 60 µm, more preferably between 45 µm and 55 µm, calculated in accordance with the method DIN EN ISO 4287:1998, said pasta having a moisture content equal to or less than 12.5% by weight of its total weight.

In an entirely preferred manner, the pasta according to the present invention may have a surface roughness Ra of between 4 µm e 11.5 µm, preferably between 6 µm and 10 µm, more preferably between 8.5 µm and 9.5 µm, calculated in accordance with the method DIN EN ISO 4287:1998.

Preferably said pasta is dried pasta.

More preferably, said pasta is durum wheat semolina dried pasta.

In an equally preferred manner, as mentioned above in relation to the process according to the invention, the pasta according to the present invention has a moisture content of between 10% and 12% by weight, even more preferably between 10% and 11.5% by weight, of its total weight.

In a consistent manner, the pasta according to present invention is able to achieve the same advantages described above in relation to the process for the production thereof.

Finally, the aforementioned technical problem is also solved by a bronze die plate insert adapted to carry out the aforementioned process and comprising at least one through-hole, said through-hole extending along an extrusion path and having a working surface with grooves which have a depth of between 0.05 mm and 0.3 mm, preferably between 0.08 mm and 0.3 mm, more preferably between 0.08 mm and 0.28 mm, even more preferably between 0.1 mm and 0.2 mm, wherein said bronze die plate insert comprises a hollow body in which said at least one through-hole is made, said through-hole comprising a first working surface, and at least one substantially cylindrical central pin, wherein said central pin extends longitudinally inside said at least one through-hole and has a second working surface.

More specifically, said first working surface has grooves shaped as a plurality of cuts, wherein said cuts are separate from and parallel to each other, said cuts being preferably oriented transversely, more preferably perpendicularly, with respect to the direction of said extrusion path.

Preferably, said second working surface has grooves which are shaped as a plurality of cuts, wherein said cuts are separate from and parallel to each other and are oriented transversely, more preferably perpendicularly, with respect to the direction of the aforementioned extrusion path.

Alternatively, said second working surface has grooves which are shaped as a thread.

The present invention is further described below in the detailed description, with reference to a number of examples of embodiment provided hereinbelow way of a non-limiting example.

### Brief description of the figures

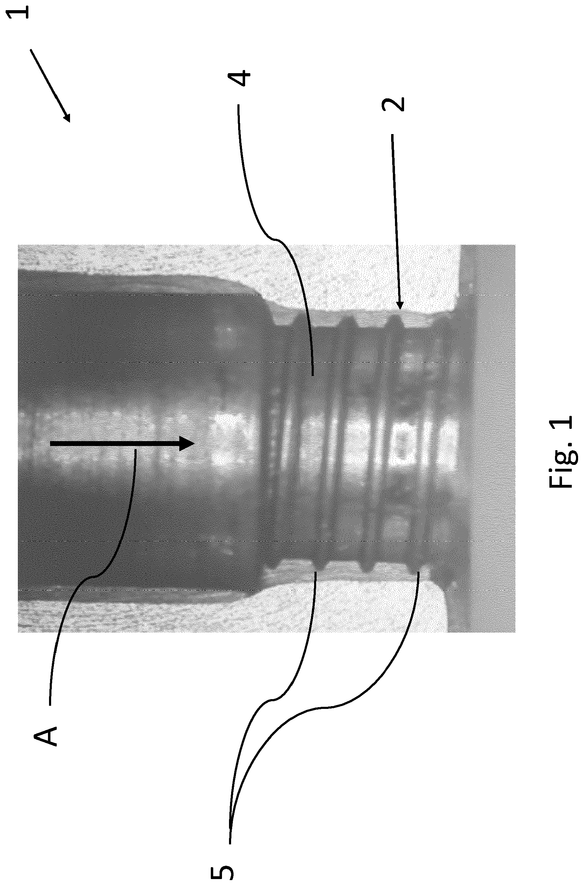

Figure 1 shows a photograph of a bronze die plate insert according to the present invention, in which a through-hole with a cavity having a substantially circular shaped cross-section and with a working surface having thread-shaped grooves is highlighted.

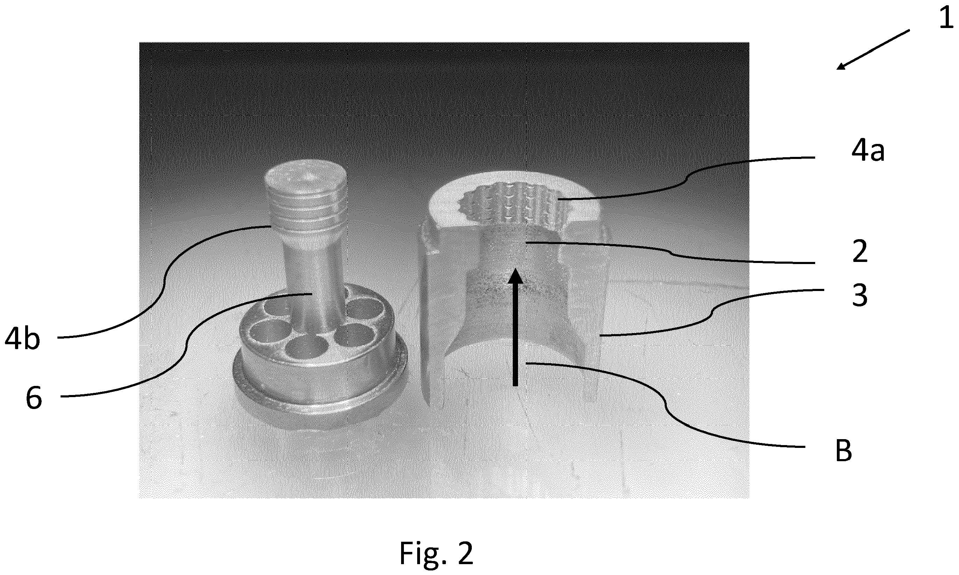

Figure 2 shows a photograph of a bronze die plate insert according to the present invention comprising a main body in which a through-hole is made, and a substantially cylindrical pin, wherein the working surface has grooves which are shaped as a plurality of cuts, which are separate from and parallel to each other and oriented transversely with respect to the direction of the extrusion path, the central pin being shown detached from the main body.

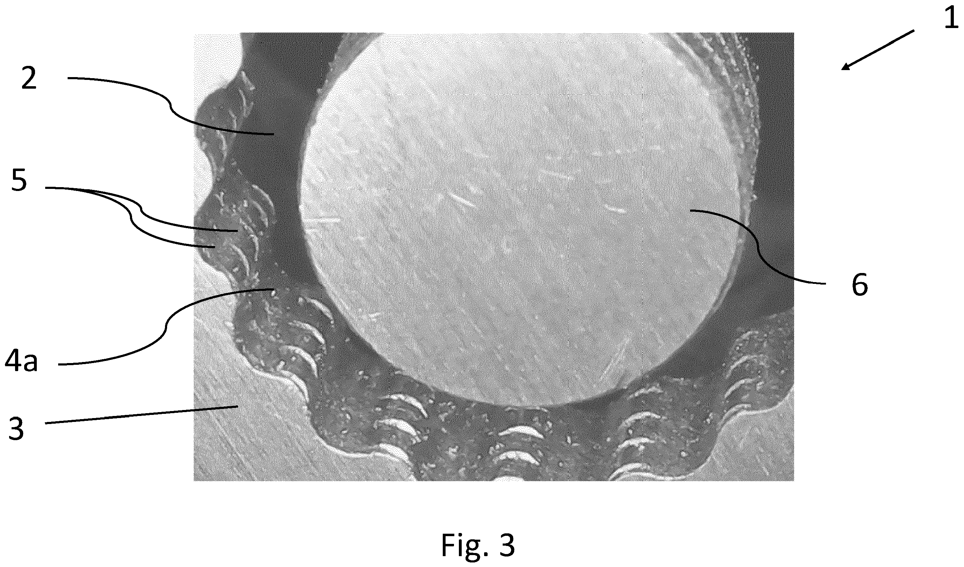

Figure 3 shows an enlargement of a front end view of the bronze insert shown in Figure 2, in which the central pin is inserted inside the main body of the bronze insert, and which shows, highlighted, a circle sector of the cavity with a cross-section substantially in the form of an annulus of the through-hole.

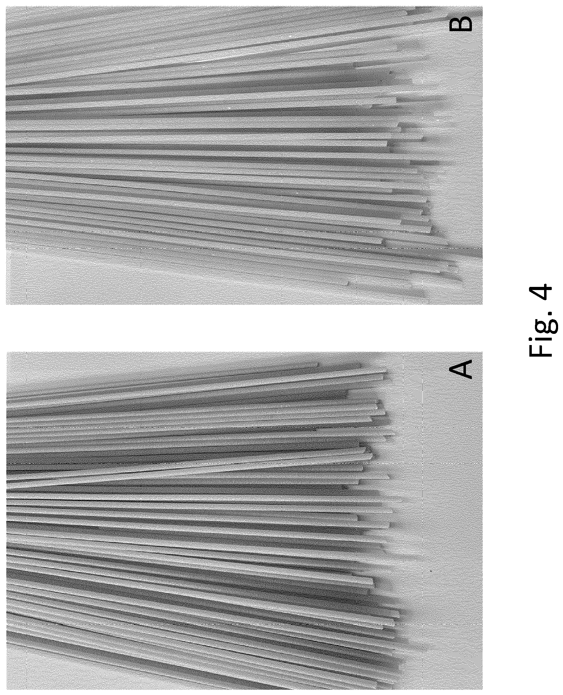

Figure 4 shows two different types of pasta, in particular durum wheat dried pasta in the form of spaghetti, i.e. a first type of pasta obtained by means of the process according to the present invention (Fig. 4, image A) and a second type of pasta (Fig. 4, image B), obtained by means of conventional bronze extrusion.

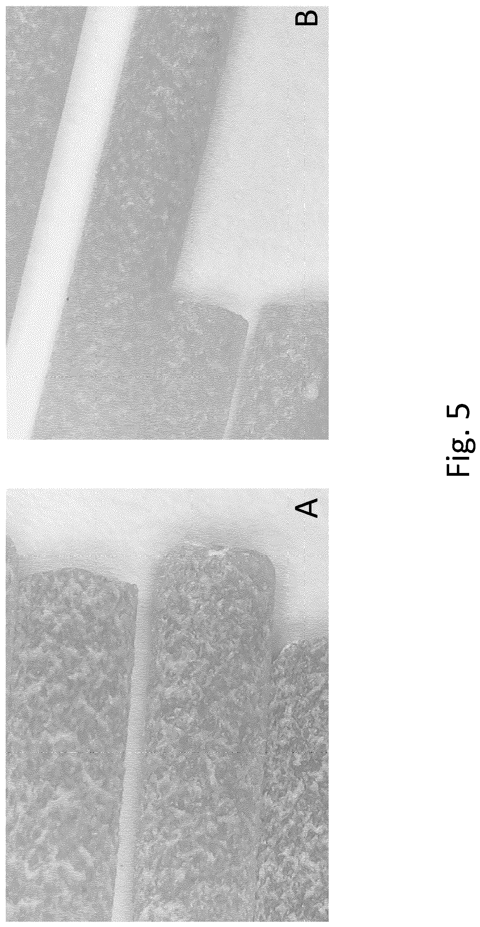

Figure 5 shows two enlarged views of the same types of pasta shown in Figure 4 (Fig. 5, image A: pasta obtained by means of the process according to the invention; Fig. 5, image B: pasta obtained by means of conventional bronze extrusion).

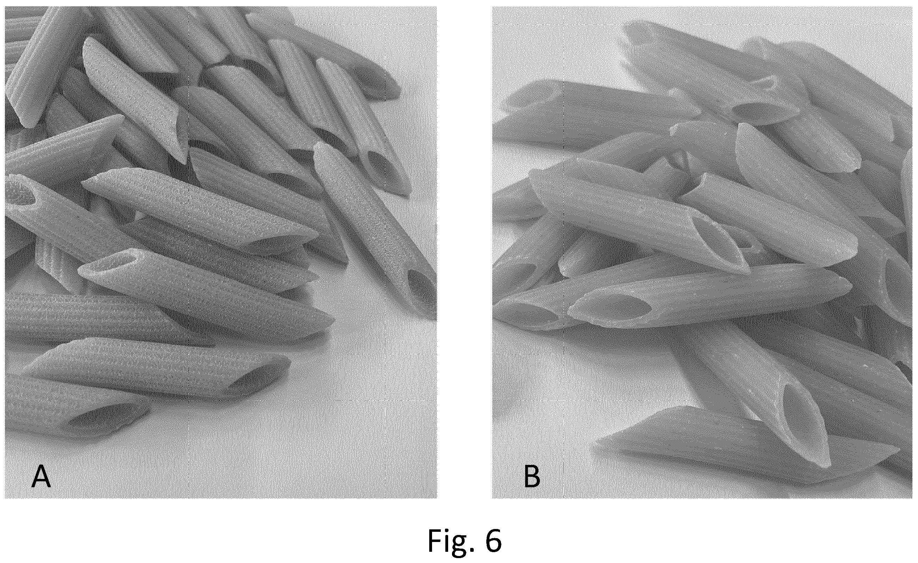

Figure 6 shows two different types of pasta, in particular durum wheat dried pasta in the form of penne, i.e. a first type of pasta obtained by means of the process according to the present invention (Fig. 6, image A) and a second type of pasta obtained by means of conventional bronze extrusion (Fig. 6, image B).

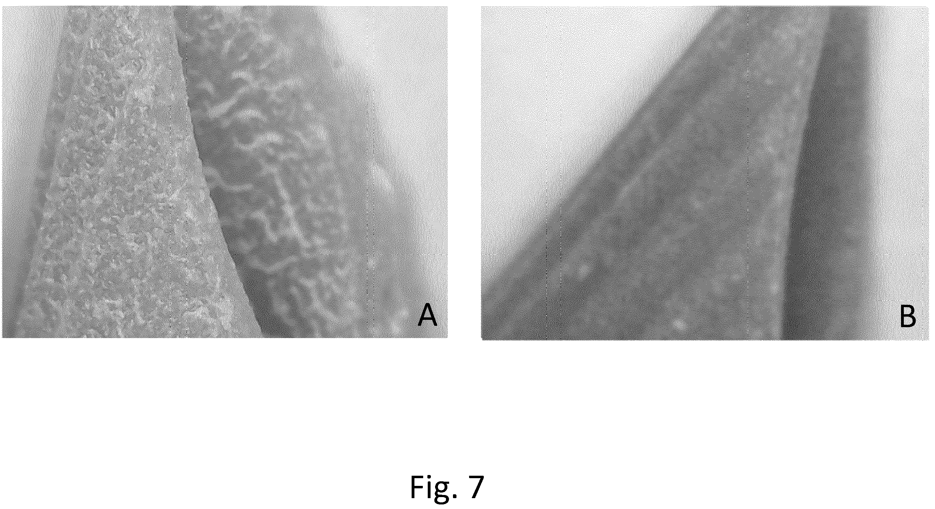

Figure 7 shows two enlarged views of the same types of pasta shown in Figure 6 (Fig. 7, image A: pasta obtained by means of the process according to the invention; Fig. 7, image B: pasta obtained by means of conventional bronze extrusion).

### Detailed Description

Figure 1 shows a photograph of bronze die plate insert 1 according to the present invention, suitable for the production of long pasta, such as spaghetti or spaghettoni.

In particular, Figure 1 shows a through-hole 2 with a cavity having a substantially circular shaped cross-section and with a working surface 4 having grooves 5 in the form of a thread.

For this particular kind of die shape insert, the depth of the grooves 5 is generally between to 0.05 mm and 0.3 mm, specifically the depth of the grooves 5 is equal to 0.15 mm.

The arrow A shown indicates the direction of extrusion.

Figure 2 shows a photograph of a bronze die plate insert 1 according to a different embodiment of the present invention.

The bronze die plate insert 1 comprises a through-hole 2 which extends along an extrusion path and has a working surface with grooves 5.

The bronze die plate insert 1 shown comprises a main body 3 inside which the through-hole 2 is made, said through-hole comprising a first working surface 4a.

More specifically, the through-hole 2 is positioned at one end of the main body 3 of the insert 1.

The insert 1 also comprises a substantially cylindrical central pin 6. The central pin 6 is shown detached from the main body 3 of the insert 1.

On the other hand, in a working configuration, as shown in the following Figure 3, the central pin 6 extends longitudinally inside the through-hole 2.

In fact, as is shown in the following Figure 3, in a working configuration, the central pin 6 is housed inside the cavity of the through-hole 2, so that the cavity of the through-hole 2 is delimited externally by the first working surface 4a and internally by a second working surface 4b, both having grooves.

The second working surface 4b corresponds to the surface 4b of the substantially cylindrical pin 6.

As is clear, the first working surface 4a and the second working surface 4b both have grooves 5, which are shaped as a plurality of cuts, separate from and parallel to each other and oriented transversely, more specifically perpendicularly, with respect to the direction of the extrusion path.

For this kind of die plate insert, the depth of the grooves 5 is generally between to 0.05 mm and 0.3 mm, too.

Specifically, for both the first working surface 5a and the second working surface 5b the depth of the grooves 5 is equal to 0.1 mm.

The direction of the extrusion path is indicated by means of an arrow B, although - as mentioned - the insert 1 shown in Figure 2 is not in the working configuration.

Figure 3 shows an enlargement of a front end view of the insert 1 shown in Figure 2 in a working configuration.

The central pin 6 is inserted inside the main body 3 of the insert 1.

As is clear, a circle sector of the cavity of the through-hole 2 having a cross-section substantially in the form of an annulus is shown.

Also clearly shown are grooves 5, which are shaped as a plurality of cuts, separate from and parallel to each other and oriented perpendicularly, with respect to the direction of the extrusion path, being formed on the second working surface 4a.

It can also be noted that the first working surface 4a has an undulating form so as to impart to the dough to be extruded through the through-hole 2 the typical ridges which are present on some forms of short pasta, such as "penne rigate" (ridged penne).

In general, the working surface of a die plate insert for producing "pasta rigata" (ridged pasta) comprises ridges adapted to produce "pasta rigata", which are distinct from the aforementioned grooves 5 having a depth of between 0.05 mm and 0.3 mm, and extend longitudinally with respect to the direction of said extrusion path.

For the die plate insert shown at Figures 2 and 3, the depth of the said ridges adapted to produce "pasta rigata" is equal to 0.48 mm.

As mentioned above, the process according to the present invention has proved to be particularly effective in the production of pasta with specific surface roughness characteristics which are particularly accentuated compared to commercially available bronze-extruded pastas.

In particular, according to a preferred embodiment and with reference to the examples below, the present process is able to provide durum wheat semolina dried pasta with a surface roughness Rz greater than the values which are normally obtained by means of extrusion of a semolina dough and water through a conventional bronze die plate insert.

More specifically, the roughness is understood in an entirely general manner as being an intensive parameter of the pasta to be analysed and is defined by performing an ideal section across its real surface with a plane orthogonal thereto, wherein said plane, called "mapping plane", intersects the surface of the pasta and defines a profile as the intersection in space between the mapping plane and the real surface of the pasta.

In this context, the surface roughness Rz is a particularly important parameter for evaluating the average surface characteristics of the dried pasta thus obtained in terms of roughness. In fact, as is known, this parameter is calculated as the distance between two parallel straight lines relative to the mean line of this profile, the mean line being defined as the line for which the sum of the squared distances of the points of the profile from the said line is minimum, wherein these two straight lines are traced at a distance equal to the mean of the distances of the five highest peaks and the mean of the distances of the five lowest valleys within the interval of the base length.

In other words, the surface roughness Rz does not provide information about the form of the surface of the pasta like a mere arithmetic mean of the distance between the peaks and valleys of this profile, but also takes into account the variability between peaks of different height and valleys of different depth, providing a more complete indication of the state of the surface in terms of roughness.

By way of supplement to the information provided by the surface roughness Rz, the surface roughness Ra was also used to evaluate surface characteristics of the pasta analysed, in which this parameter is instead the arithmetic mean of the distances of the points of the profile from the mean reference line.

All the surface parameters mentioned above were calculated with the aid of a roughness meter of the type Waveline W10 supplied by the company OGP HOMMEL Italia S.r.l., where the surface roughness Rz was calculated in accordance with the test method DIN EN ISO 4287:1998 and the surface roughness Ra was calculated in accordance with the test method DIN EN ISO 4287:1998.

### Example 1a - Process for the production of pasta according to the invention (spaghetti)

In a continuously executed process, during the mixing step b) of the present process, 3400 kg of durum wheat semolina with a moisture content of about 15% by weight, and 1224 kg of water, were fed into a twin-screw extruder.

After suitable mixing, the overall water content in the dough was equal to 36% by weight of the total weight of the dough.

The extruder used, which was supplied by the company Pavan, was equipped with a bronze die plate insert according to the process of the present invention, as shown in Figure 1 and characterized in detail before, and comprising through-holes with a working surface having grooves in the form of a thread.

More specifically, the through-holes of the bronze die plate insert used during this test had a cavity with a substantially circular shaped cross-section, namely the through-holes had a shape and dimensions suitable for producing pasta in the form of spaghetti.

The dough was stirred by means of rotation of the extruder screws so as to carry out the first mixing step b) and then the kneading step c) by means of the same tool.

During the mixing step b), the screws of the extruder were rotated at a speed of 21 rpm for a time period of about 20 minutes.

The mixing temperature was 38°C.

During the mixing step d), partial vacuum conditions, namely a pressure of -649 mm/Hg, were applied inside the extruder.

Thereafter, the step d) of extruding the dough through the aforementioned insert was performed, with a pressure of 95 bar being exerted on the dough.

The continuous strand of dough thus extruded for the production of spaghetti was cut and immediately subjected to a surface drying operation ("incartamento") by means of the application of a hot air flow, as soon as it was deposited.

This was followed by successive surface drying operations and a drying operation inside an entirely conventional continuous dryer with several zones which were heated to a temperature of between 70°C and 95°C.

Finally the dried pasta thus obtained according to the process of the present invention was cooled.

The moisture content of the dried pasta thus obtained was equal to about 11.5% by weight of its total weight.

The spaghetti thus obtained had a visibly porous surface with an intense and homogeneous graininess and an amber yellow colour, as shown in Figure 4 (Image A) and in the enlarged view of Figure 5 (Image A).

### Example 1b - Process for the production of pasta not according to the invention (spaghetti)

The procedure carried out in Example 1a was repeated in the same manner in the mixing step b), the kneading step c) and the drying step e). Similarly, the latter step was preceded by surface drying and followed by cooling of the product.

The extruder used is the same one used in Example 1a, but in this case the die was equipped with a conventional bronze die plate insert, i.e. where the working surface of the through-holes was without grooves.

The through-holes of the bronze die plate insert had a shape and dimensions suitable for producing pasta in the form of spaghetti.

During the extrusion step d) the dough was extruded through the aforementioned insert, with a pressure of 95 bar being exerted on the dough.

When viewed, the spaghetti thus obtained had a surface with a barely noticeable porosity which, also to the naked eye, was substantially less than that of the spaghetti obtained in Example 1a, and an opaque yellow colour, as shown in Figure 4 (Image B) and the enlarged view of Figure 5 (Image B).

### Example 2a - Process for the production of pasta according to the invention (ridged penne)

The procedure carried out in the preceding examples was repeated in the same manner in the mixing step b), the kneading step c) and the drying step e). Similarly, the latter step was preceded by surface drying and followed by cooling of the product.

The extruder used is the same one as in the preceding examples, but in this case the die was equipped with bronze die plate inserts according to the process of the present invention, as shown in Figure 3 and characterized in detail before, and comprising a through-hole with a working surface having grooves, wherein the latter were shaped as a plurality of cuts, separate from and parallel to each other and oriented perpendicularly with respect to the direction of the extrusion path of the dough.

More specifically, the through-hole of the bronze die plate insert used during this test had a cavity with a cross-section which had substantially the shape of an annulus, namely the through-hole of the bronze die plate insert had a shape and dimensions suitable for producing pasta in the form of ridged penne.

In particular, the bronze die plate insert used had structural characteristics entirely comparable to those of the bronze insert shown in the aforementioned Figures 2 and 3, namely comprised a main body in which said through-hole was formed and a central pin, inserted inside the through-hole and having a second working surface provided with grooves shaped as a plurality of cuts separate from and parallel to each other and oriented perpendicularly with respect to the direction of the extrusion path of the dough.

During the extrusion step d), the dough was extruded through the aforementioned insert, with a pressure of 100 bar being exerted on the dough.

The penne thus obtained had a visibly porous surface with an intense and homogeneous graininess and an amber yellow colour, as shown in Figure 6 (Image A) and the enlarged view of Figure 7 (Image A).

### Example 2b - Process for the production of pasta not according to the invention (ridged penne)

The procedure carried out in the preceding examples was repeated in the same manner in the mixing step b), the kneading step c) and the drying step e). Similarly, the latter was preceded by the surface drying and followed by cooling of the product.

The extruder used is the same one used in the preceding examples, but in this case the die was equipped with a conventional bronze die plate insert in which the working surface of the through-holes was without grooves.

The through-holes of the bronze die plate insert had a shape and dimensions suitable for producing pasta in the form of ridged penne.

During the extrusion step d), the dough was extruded through the aforementioned insert, with a pressure of 100 bar being exerted on the dough.

When viewed, the penne thus obtained had a surface with a barely noticeable porosity which, also to the naked eye, was substantially less than that of the penne obtained in Example 2a, and an opaque yellow colour, as shown in Figure 6 (Image B) and the enlarged view of Figure 7 (Image B).

### Comparative evaluation of the pasta according to Examples and 1b and the pasta according to Examples 2a and 2b

Firstly the surface roughness characteristics of the products obtained in Examples 1a, 1b, 2a and 2b were assessed.

Then the surface roughness characteristics of the different types of pasta, as obtained according to the above examples, after cooking, were calculated.

The surface roughness of the dried pasta as obtained in the above examples was calculated according to the test method DIN EN ISO 4287:1998 and the surface roughness Ra and the surface roughness Rz were evaluated.

The test results obtained are listed in Table 1 below.

**Table 1**

| **Type of insert** | **Pressure exerted on dough** | **Pasta type** | **Roughness Ra (µm)** | **Roughness Rz (µm)** |
|---|---|---|---|---|
| Bronze with threads (Example 1a) | 95 bar | Spaghetti | 9.24 | 52.12 |
| Standard bronze (Example 1b) | 95 bar | Spaghetti | 7.94 | 47.03 |
| Bronze with transverse cuts (Example 2a) | 100 bar | Ridged penne | 8.66 | 46.65 |
| Standard bronze (Example 2b) | 100 bar | Ridged penne | 4.78 | 27.67 |

As is clear, the long pasta obtained in accordance with the present process, namely in the Example 1a, has a surface roughness Rz equal to 52.12 µm, namely a roughness value Rz greater than that of pasta extruded through a bronze insert with through-holes without grooves and obtained from a dough with the same characteristics (Example 1b).

The long pasta according to the invention also had a particularly high roughness value Ra, greater than that of pasta extruded through a standard bronze die plate insert (Example 1b).

As is clear, the short pasta obtained in accordance with the present process, namely according to Example 2a, had a surface roughness Rz equal to 46.65 µm, namely a roughness value Rz higher than that of pasta extruded through a bronze insert having through-holes without grooves and obtained from a dough with the same characteristics (Example 2b).

The short pasta according to the invention also had a particularly high roughness value Ra, greater than that of pasta extruded through a standard bronze die plate insert (Example 2b).

Then the surface roughness of the product after cooking of the dried pasta thus obtained in unsalted boiling water was calculated.

The dried pasta was cooked in boiling water for 11 minutes in the case of the spaghetti and for 12 minutes in the case of the penne.

The analysis of the surface roughness of the cooked product was performed by means of the procedure ISO4287:1997 using a 3D digital microscope HIROX RH-2000.

The test results obtained are listed in Table 2 below.

**Table 2**

| **Type of insert** | **Pasta type** | **Roughness after cooking (µm)** |
|---|---|---|
| Bronze with threads (Example 1a) | Spaghetti | 3.1 |
| Standard bronze (Example 1b) | Spaghetti | 2.26 |
| Bronze with transverse cuts (Example 2a) | Ridged penne | 4.1 |
| Standard bronze (Example 2b) | Ridged penne | 1.4 |

After cooking, the cooked pasta thus obtained after cooking the dried pasta of Example 1a had particularly high roughness values greater than those of cooked pasta obtained after cooking in boiling water the dried pasta of Example 1b in same cooking conditions.

The cooked pasta obtained after cooking the dry pasta of Example 2a had particularly high roughness values greater than those of the cooked product obtained from the dried pasta of Example 2b.

## Claims

1. A process for the production of pasta comprising the following steps:
a) providing a bronze die plate insert comprising at least one through-hole, wherein said through-hole extends along an extrusion path and has a working surface with grooves having a depth of between 0.05 mm and 0.3 mm;
b) mixing water and a meal which is suitable for producing pasta, so as to obtain a dough with a water content of between 33.5% and 38.5% by weight of its total weight;
c) kneading said dough;
d) extruding said kneaded dough through the at least one through-hole of said bronze die plate insert;
e) drying said extruded dough, obtaining pasta with a moisture content which is equal to or less than 12.5% by weight of its total weight.

2. The process according to claim 1, wherein in the mixing step b) said meal which is suitable for producing pasta is a cereal flour or semolina, preferably durum wheat semolina or semolato.

3. The process according to claim 1 or 2, wherein said grooves have a depth of between 0.08 mm and 0.3 mm, preferably between 0.08 mm and 0.28 mm, more preferably between 0.1 mm and 0.2 mm.

4. The process according to any one of the preceding claims, wherein said grooves extend transversely with respect to the direction of said extrusion path.

5. The process according to claim 4, wherein said grooves are shaped as a thread.

6. The process according to claim 4, wherein said grooves are shaped as a plurality of cuts transverse with respect to the direction of said extrusion path, said cuts being separate from and parallel to each other, preferably said cuts being oriented perpendicularly with respect to the direction of said extrusion path.

7. The process according to claim 6, wherein said at least one bronze die plate insert (1) comprises a main body (3) in which said at least one through-hole (2) is made, said through-hole (2) comprising a first working surface (4a), and at least one substantially cylindrical central pin (6), said central pin (6) extending longitudinally inside said at least one through-hole (2) and having a second working surface (4b), wherein said first working surface (4a) has grooves (5) in the form of a plurality of cuts transverse with respect to the direction of said extrusion path, said cuts being separate from and parallel to each other, preferably said cuts being oriented perpendicularly with respect to the direction of said extrusion path.

8. The process according to claim 7, wherein said second working surface (4b) has grooves (5) which are shaped as a plurality of cuts, wherein said cuts are separate from and parallel to each other and are oriented transversely, preferably perpendicularly, with respect to the direction of said extrusion path.

9. The process according to claim 7, wherein said second working surface has grooves which are shaped as a thread.

10. The process according to any one of claims 1 to 3, wherein said grooves of the working surface of said at least one through-hole extend longitudinally with respect to the direction of said extrusion path.

11. The process according to claim 10, wherein said grooves are shaped as a plurality of longitudinal cuts with respect to the direction of said extrusion path, said cuts being separate from and parallel to each other, preferably said cuts being oriented parallel with respect to the direction of said extrusion path.

12. The process according to any one of the preceding claims, wherein in said mixing step b) a dough with a water content of between 35.5% and 37% by weight of its total weight is obtained.

13. The process according to any one of the preceding claims, wherein said mixing step b) is carried out at a temperature of between 20°C and 50°C, preferably between 30°C and 40°C, for a time period of between 20 minutes and 30 minutes.

14. The process according to any one of the preceding claims, wherein said extruding step d) is carried out by exerting a pressure of between 60 bar and 110 bar, preferably between 75 bar and 100 bar, more preferably between 85 bar and 100 bar, on said dough.

15. The process according to any one of the preceding claims, wherein in said drying step e) pasta with a moisture content of between 10% and 11.5% by weight of its total weight is obtained.

16. The process according to any one of the preceding claims, wherein said drying step e) is carried out at a temperature of between 50°C and 100°C, preferably between 70°C and 85°C.

17. The process according to any one of the preceding claims, wherein said pasta obtained in the drying step e) has a surface roughness Rz of between 45 µm and 65 µm, preferably between 45 µm and 60 µm, more preferably between 45 µm and 55 µm, calculated in accordance with the method DIN EN ISO 4287:1998.

18. A pasta obtainable by the process according to any one of the preceding claims, having a surface roughness Rz of between 45 µm and 65 µm, preferably between 45 µm and 60 µm, more preferably between 45 µm and 55 µm, calculated in accordance with the method DIN EN ISO 4287:1998, said pasta having a moisture content which is equal to or less than 12.5% by weight of its total weight.

19. The pasta according to claim 18, wherein said pasta is dried pasta, preferably durum wheat semolina dried pasta.

20. A bronze die plate insert (1) which is adapted to carry out the process according to any one of claims 7 to 9 and comprising at least one through-hole (2), said through-hole (2) extending along an extrusion path and having a working surface with grooves (5) having a depth of between 0.05 mm and 0.3 mm, preferably between 0.08 mm and 0.3 mm, more preferably between 0.08 mm and 0.28 mm, even more preferably between 0.1 mm and 0.2 mm, wherein said bronze die plate insert (1) comprises a main body (3) in which said at least one through-hole (2) is made, said through-hole (2) comprising a first working surface (4a), and at least one substantially cylindrical central pin (6), said central pin (6) extending longitudinally inside said at least one through-hole (2) and having a second working surface (4b), wherein said first working surface (4a) has grooves (5) shaped as a plurality of cuts, said cuts being separate from and parallel to each other, said cuts being oriented transversely, preferably perpendicularly, with respect to the direction of said extrusion path.

21. The bronze die plate insert (1) according to claim 20, wherein said second working surface (4b) has grooves (5) which are shaped as a plurality of cuts, wherein said cuts are separate from and parallel to each other and are oriented transversely, preferably perpendicularly, with respect to the direction of said extrusion path.

22. The bronze die plate insert (1) according to claim 20, wherein said second working surface has grooves which are shaped as a thread.

## Patentansprüche

1. Verfahren zur Herstellung von Teigwaren, das die folgenden Schritte umfasst:
a) Bereitstellen eines Bronze-Matrizenplatteneinsatzes mit mindestens einem Durchgangsloch, wobei sich das Durchgangsloch entlang eines Extrusionsweges erstreckt und eine Arbeitsfläche mit Nuten mit einer Tiefe zwischen 0,05 mm und 0,3 mm aufweist;
b) Mischen von Wasser und einem für die Herstellung von Teigwaren geeigneten Mehl, um einen Teig mit einem Wassergehalt zwischen 33,5 und 38,5 Gew.-% seines Gesamtgewichts zu erhalten;
c) Kneten des Teigs;
d) Extrudieren des gekneteten Teigs durch das mindestens eine Durchgangsloch des Bronzeplatteneinsatzes;
e) Trocknen des extrudierten Teigs, wobei Nudeln mit einem Feuchtigkeitsgehalt von 12,5 Gew.-% oder weniger, bezogen auf das Gesamtgewicht, erhalten werden.

2. Verfahren nach Anspruch 1, **dadurch gekennzeichnet, dass** im Mischschritt b) das zur Herstellung von Teigwaren geeignete Mehl ein Getreidemehl oder -grieß, vorzugsweise Hartweizengrieß oder Semolato, ist.

3. Verfahren nach Anspruch 1 oder 2, wobei die Rillen eine Tiefe zwischen 0,08 mm und 0,3 mm, vorzugsweise zwischen 0,08 mm und 0,28 mm, besonders bevorzugt zwischen 0,1 mm und 0,2 mm aufweisen.

4. Verfahren nach einem der vorhergehenden Ansprüche, wobei sich die Nuten quer zur Richtung des Extrusionsweges erstrecken.

5. Verfahren nach Anspruch 4, wobei die Nuten als Gewinde ausgebildet sind.

6. Verfahren nach Anspruch 4, wobei die Nuten als eine Vielzahl von Schnitten quer zur Richtung des Extrusionsweges geformt sind, wobei die Schnitte voneinander getrennt und parallel zueinander sind, vorzugsweise sind die Schnitte senkrecht zur Richtung des Extrusionsweges ausgerichtet.

7. Verfahren nach Anspruch 6, wobei der mindestens eine Bronze-Matrizenplatteneinsatz (1) einen Hauptkörper (3) umfasst, in dem das mindestens eine Durchgangsloch (2) hergestellt ist, wobei das Durchgangsloch (2) eine erste Arbeitsfläche (4a) und mindestens einen im Wesentlichen zylindrischen zentralen Stift (6) umfasst, wobei sich der zentrale Stift (6) in Längsrichtung innerhalb des mindestens einen Durchgangslochs (2) erstreckt und eine zweite Arbeitsfläche (4b) aufweist, wobei die erste Arbeitsfläche (4a) Nuten (5) in Form einer Vielzahl von Schnitten quer zur Richtung des Extrusionsweges aufweist, wobei die Schnitte voneinander getrennt und parallel zueinander sind, wobei die Schnitte vorzugsweise senkrecht zur Richtung des Extrusionsweges ausgerichtet sind.

8. Verfahren nach Anspruch 7, wobei die zweite Arbeitsfläche (4b) Nuten (5) aufweist, die als eine Vielzahl von Schnitten geformt sind, wobei die Schnitte voneinander getrennt und parallel zueinander sind und quer, vorzugsweise senkrecht, in Bezug auf die Richtung des Extrusionsweges ausgerichtet sind.

9. Verfahren nach Anspruch 7, wobei die zweite Arbeitsfläche Nuten aufweist, die als Gewinde geformt sind.

10. Verfahren nach einem der Ansprüche 1 bis 3, wobei sich die Rillen der Arbeitsfläche des mindestens einen Durchgangslochs in Längsrichtung des Extrusionsweges erstrecken.

11. Verfahren nach Anspruch 10, wobei die Nuten als eine Vielzahl von Längsschnitten in Bezug auf die Richtung des Extrusionsweges geformt sind, wobei die Schnitte voneinander getrennt und parallel zueinander sind, vorzugsweise sind die Schnitte parallel zur Richtung des Extrusionsweges ausgerichtet.

12. Verfahren nach einem der vorhergehenden Ansprüche, wobei in dem Mischschritt b) ein Teig mit einem Wassergehalt zwischen 35,5 und 37 Gew.-% seines Gesamtgewichts erhalten wird.

13. Verfahren nach einem der vorhergehenden Ansprüche, wobei der Mischschritt b) bei einer Temperatur zwischen 20°C und 50°C, vorzugsweise zwischen 30°C und 40°C, für eine Zeitdauer zwischen 20 Minuten und 30 Minuten durchgeführt wird.

14. Verfahren nach einem der vorhergehenden Ansprüche, wobei der Extrudierschritt d) durch Ausüben eines Drucks zwischen 60 bar und 110 bar, vorzugsweise zwischen 75 bar und 100 bar, besonders bevorzugt zwischen 85 bar und 100 bar, auf den Teig durchgeführt wird.

15. Verfahren nach einem der vorhergehenden Ansprüche, wobei in dem Trocknungsschritt e) Teigwaren mit einem Feuchtigkeitsgehalt zwischen 10 und 11,5 Gew.-% ihres Gesamtgewichts erhalten werden.

16. Verfahren nach einem der vorhergehenden Ansprüche, wobei der Trocknungsschritt e) bei einer Temperatur zwischen 50°C und 100°C, vorzugsweise zwischen 70°C und 85°C, durchgeführt wird.

17. Verfahren nach einem der vorhergehenden Ansprüche, wobei die im Trocknungsschritt e) erhaltene Pasta eine Oberflächenrauheit Rz zwischen 45 µm und 65 µm, vorzugsweise zwischen 45 µm und 60 µm, besonders bevorzugt zwischen 45 µm und 55 µm, berechnet nach der Methode DIN EN ISO 4287:1998, aufweist.

18. Teigwaren, erhältlich nach dem Verfahren gemäß einem der vorangehenden Ansprüche, mit einer Oberflächenrauheit Rz zwischen 45 µm und 65 µm, vorzugsweise zwischen 45 µm und 60 µm, besonders bevorzugt zwischen 45 µm und 55 µm, berechnet nach dem Verfahren DIN EN ISO 4287:1998, wobei die Teigwaren einen Feuchtigkeitsgehalt aufweisen, der gleich oder weniger als 12,5 Gew.-% ihres Gesamtgewichts beträgt.

19. Teigwaren nach Anspruch 18, wobei die Teigwaren getrocknete Teigwaren sind, vorzugsweise getrocknete Hartweizengrieß-Teigwaren.

20. Bronze-Matrizeneinsatz (1), der zur Durchführung des Verfahrens nach einem der Ansprüche 7 bis 9 geeignet ist und mindestens ein Durchgangsloch (2) aufweist, wobei sich das Durchgangsloch (2) entlang eines Extrusionsweges erstreckt und eine Arbeitsfläche mit Nuten (5) aufweist, die eine Tiefe zwischen 0,05 mm und 0,3 mm, vorzugsweise zwischen 0,08 mm und 0,3 mm, noch bevorzugter zwischen 0,08 mm und 0,28 mm, noch bevorzugter zwischen 0,1 mm und 0,2 mm haben.2 mm, wobei der Bronzeplatteneinsatz (1) einen Hauptkörper (3) umfasst, in dem das mindestens eine Durchgangsloch (2) hergestellt ist, wobei das Durchgangsloch (2) eine erste Arbeitsfläche (4a) und mindestens einen im Wesentlichen zylindrischen zentralen Stift (6) umfasst, wobei sich der zentrale Stift (6) in Längsrichtung innerhalb des mindestens einen Durchgangslochs (2) erstreckt und eine zweite Arbeitsfläche (4b) aufweist, wobei die erste Arbeitsfläche (4a) Nuten (5) aufweist, die als eine Vielzahl von Schnitten geformt sind, wobei die Schnitte voneinander getrennt und parallel zueinander sind, wobei die Schnitte quer, vorzugsweise senkrecht, in Bezug auf die Richtung des Extrusionsweges orientiert sind.

21. Bronzeplatteneinsatz (1) nach Anspruch 20, wobei die zweite Arbeitsfläche (4b) Nuten (5) aufweist, die als eine Vielzahl von Schnitten geformt sind, wobei die Schnitte voneinander getrennt und parallel zueinander sind und quer, vorzugsweise senkrecht, in Bezug auf die Richtung des Extrusionsweges ausgerichtet sind.

22. Bronzeschneidplatteneinsatz (1) nach Anspruch 20, wobei die zweite Arbeitsfläche Nuten aufweist, die als Gewinde geformt sind.

## Revendications

1. Un procédé pour la production de pâtes alimentaires comprenant les étapes suivantes :
a) la fourniture d'un insert de plaque de matrice en bronze comprenant au moins un trou traversant, dans lequel ledit trou traversant s'étend le long d'une trajectoire d'extrusion et présente une surface de travail avec des rainures d'une profondeur comprise entre 0,05 mm et 0,3 mm ;
b) le mélange d'eau et d'une farine adaptée à la fabrication de pâtes alimentaires, afin d'obtenir une pâte dont la teneur en eau est comprise entre 33,5 % et 38. 5 % en poids de son poids total ;
c) le pétrissage de ladite pâte ;
d) l'extrusion ladite pâte pétrie à travers au moins un trou traversant de l'insert de la plaque de matrice en bronze ;
e) le séchage ladite pâte extrudée, l'obtention de pâtes alimentaires avec une teneur en humidité égale ou inférieure à 12,5 % en poids de son poids total.

2. Procédé selon la revendication 1, dans lequel, à l'étape de mélange b), ladite farine adaptée à la production de pâtes alimentaires est une farine de céréales ou une semoule, de préférence une semoule de blé dur ou un semolato.

3. Procédé selon la revendication 1 ou 2, dans lequel lesdites rainures ont une profondeur comprise entre 0,08 mm et 0,3 mm, de préférence entre 0,08 mm et 0,28 mm, plus préférentiellement entre 0,1 mm et 0,2 mm.

4. Le procédé selon l'une quelconque des revendications précédentes, dans lequel lesdites rainures s'étendent transversalement par rapport à la direction de ladite trajectoire d'extrusion.

5. Procédé selon la revendication 4, dans lequel lesdites rainures ont la forme d'un fil.

6. Procédé selon la revendication 4, dans lequel lesdites rainures ont la forme d'une pluralité de coupes transversales par rapport à la direction de la trajectoire d'extrusion, lesdites coupes ayant la forme d'un filet de ladite trajectoire d'extrusion, lesdites coupes étant séparées et parallèles les unes aux autres, de préférence lesdites coupes étant orientées perpendiculairement par rapport à la direction de ladite trajectoire d'extrusion.

7. Procédé selon la revendication 6, dans lequel ledit au moins un insert de plaque de matrice en bronze (1) comprend un corps principal (3) dans lequel ledit au moins un trou traversant (2) est situé , ledit trou traversant (2) comprenant une première surface de travail (4a) et au moins une broche centrale (6) sensiblement cylindrique, ladite broche centrale (6) s'étendant longitudinalement à l'intérieur dudit au moins un trou traversant (2) et présentant une deuxième surface de travail (4b), dans laquelle ladite première surface de travail (4a) présente des rainures (5) sous la forme d'une pluralité de coupes transversales par rapport à la direction de ladite trajectoire d'extrusion, lesdites coupes étant séparées et parallèles les unes aux autres, de préférence lesdites coupes étant orientées perpendiculairement par rapport à la direction de ladite trajectoire d'extrusion.

8. Procédé selon la revendication 7, dans lequel ladite deuxième surface de travail (4b) comporte des rainures (5) qui ont la forme d'une pluralité de coupes, lesdites coupes étant séparées et parallèles les unes aux autres et orientées transversalement, de préférence perpendiculairement, par rapport à la direction de ladite trajectoire d'extrusion.

9. Procédé selon la revendication 7, dans lequel ladite seconde surface de travail comporte des rainures qui ont la forme d'un fil.

10. Procédé selon l'une quelconque des revendications 1 à 3, dans lequel lesdites rainures de la surface de travail dudit au moins un trou traversant s'étendent longitudinalement par rapport à la direction de ladite trajectoire d'extrusion.

11. Procédé selon la revendication 10, dans lequel lesdites rainures ont la forme d'une pluralité de coupes longitudinales par rapport à la direction de ladite trajectoire d'extrusion, lesdites coupes étant séparées et parallèles les unes aux autres, de préférence lesdites coupes étant orientées parallèlement à la direction de ladite trajectoire d'extrusion.

12. Procédé selon l'une quelconque des revendications précédentes, dans lequel, lors de l'étape de mélange b), on obtient une pâte dont la teneur en eau est comprise entre 35% et 37% en poids de son poids total.

13. Procédé selon l'une quelconque des revendications précédentes, dans lequel ladite étape de mélange b) est effectuée à une température comprise entre 20°C et 50°C, de préférence entre 30°C et 40°C, pendant une durée comprise entre 20 minutes et 30 minutes.

14. Le procédé selon l'une quelconque des revendications précédentes, dans lequel ladite étape d'extrusion d) est réalisée en exerçant une pression comprise entre 60 bar et 110 bar, de préférence entre 75 bar et 100 bar, plus préférentiellement entre 85 bar et 100 bar, sur ladite pâte.

15. Procédé selon l'une quelconque des revendications précédentes, dans lequel à ladite étape de séchage e) on obtient des pâtes alimentaires dont le taux d'humidité est compris entre 10% et 11,5% en poids de leur poids total.

16. Procédé selon l'une quelconque des revendications précédentes, dans lequel ladite étape de séchage e) est effectuée à une température comprise entre 50°C et 100°C, de préférence entre 70°C et 85°C.

17. Procédé selon l'une quelconque des revendications précédentes, dans lequel lesdites pâtes obtenues à l'étape de séchage e) présentent une rugosité de surface Rz comprise entre 45 µm et 65 µm, de préférence entre 45 µm et 60 µm, de préférence entre 45 µm et 55 µm, calculée selon la méthode DIN EN ISO 4287 : 1998.

18. Pâtes alimentaires susceptibles d'être obtenues par le procédé selon l'une quelconque des revendications précédentes, présentant une rugosité de surface Rz comprise entre 45 µm et 65 µm, de préférence entre 45 µm et 60 µm, plus préférentiellement entre 45 µm et 55 µm, calculée selon la méthode DIN EN ISO 4287 : 1998, lesdites pâtes ayant une teneur en eau égale ou inférieure à 12,5 % en poids de leur poids total.

19. Pâtes alimentaires selon la revendication 18, dans lesquelles lesdites pâtes sont des pâtes alimentaires sèches, de préférence des pâtes alimentaires sèches à base de semoule de blé dur.

20. Insert de plaque de de matrice en bronze (1) adaptée à la mise en œuvre du procédé selon l'une quelconque des revendications 7 à 9 et comprenant au moins un trou traversant (2), ledit trou traversant (2) s'étendant le long d'une trajectoire d'extrusion et présentant une surface de travail avec des rainures (5) d'une profondeur comprise entre 0,05 mm et 0,3 mm, de préférence entre 0,08 mm et 0,3 mm, de préférence entre 0,08 mm et 0,28 mm, de préférence encore entre 0,1 mm et 0,2 mm, dans lequel ledit insert de plaque de de matrice en bronze (1) comprend un corps principal (3) dans lequel est pratiqué ledit au moins un trou traversant (2), ledit trou traversant (2) comprenant une première surface de travail (4a), et au moins un axe central (6) sensiblement cylindrique, ledit axe central (6) comprenant une première surface de travail (4a), et au moins une broche centrale ) sensiblement cylindrique (6), ladite broche centrale (6) s'étendant longitudinalement à l'intérieur dudit trou traversant (2) et ayant une deuxième surface de travail (4b), dans laquelle ladite première surface de travail (4a) a des rainures (5) en forme de plusieurs coupes, lesdites coupes étant séparées et parallèles les unes aux autres, lesdites coupes étant orientées transversalement, de préférence perpendiculairement, par rapport à la direction de ladite trajectoire d'extrusion.

21. Insert de plaque de matrice en bronze (1) selon la revendication 20, dans laquelle la deuxième surface de travail (4b) présente des rainures (5) qui ont la forme d'une pluralité de coupes, dans lesquelles ces coupes sont séparées et parallèles les unes aux autres et sont orientées transversalement, de préférence perpendiculairement, par rapport à la direction de ladite trajectoire d'extrusion.

22. Insert de plaque de matrice en bronze (1) selon la revendication 20, dans laquelle la deuxième surface de travail présente des rainures en forme de fils.
